# EUROPÄISCHE PATENTSCHRIFT

(11) **EP 2 026 994 B1**
(45) Veröffentlichungstag und Bekanntmachung des Hinweises auf die Patenterteilung: **16.07.2014**
(21) Anmeldenummer: 07729757.0
(22) Anmeldetag: 31.05.2007
(51) Int. Cl.: B60R 13/08, G10K 11/168

(54) **AKUSTISCH UND THERMISCH WIRKENDE ISOLATION**
ACOUSTICALLY AND THERMALLY ACTING INSULATION
ISOLATION A EFFET ACOUSTIQUE ET THERMIQUE

(30) Priorität: 09.06.2006 DE 102006027230
(43) Veröffentlichungstag der Anmeldung: 25.02.2009
(60) Teilanmeldung: 13158206.6
(73) Patentinhaber: HP Pelzer Holding GmbH, 58454 Witten (DE)
(72) Erfinder: SCHULZE, Volkmar, 84069 Schierling (DE); KELLER, Hans-Peter, CH-5034 Suhr (CH); KURSCH, Volker, 45141 Essen (DE)
(74) Vertreter: Von Kreisler Selting Werner - Partnerschaft von Patentanwälten und Rechtsanwälten mbB
(86) Internationale Anmeldenummer: PCT/EP2007/055356
(87) Internationale Veröffentlichungsnummer: WO 2007/141193

(56) Entgegenhaltungen:
- EP-A- 1 029 742
- WO-A-98/18657
- WO-A-99/44817
- WO-A-03/021096
- DE-B3- 10 324 257
- US-A1- 2003 124 314

## Beschreibung

Gegenstand der Erfindung ist eine mehrschichtige akustisch und thermisch wirkende Isolation mit einem definierten Schichtaufbau, für Verbrennungsmotoren von Kraftfahrzeugen.

Im Motorraum von Kraftfahrzeugen sind heute eine Vielzahl von Einzel-Schallisolierungen installiert. Im Wesentlichen spricht man von den Schallisolierungen Motorhaube, Stirnwand, Tunnel sowie dem Unterschild mit Absorber, der Designabdeckung mit Absorber und den akustisch wirksamen Hitzeschilden. Auch zählt man in letzter Zeit die textilen Radhausschalen mit dazu. In ihrer Materialstruktur spricht man bei den Schallisolierungen von reinen Absorbern, Masse-Absorber-Systemen, Feder-Masse-Systemen und Sandwichbauteilen im Allgemeinen. Als Absorber-Materialien finden temperaturbeständige Deckvliese, PUR-Leicht-/-Schnittschaumstoffe, Melaminharzschaumstoff, Flockenverbundschaumstoff und Einstofffaser- bzw. Mischfaservliese, zum Teil in Kombination, Anwendung. Als Dämmung setzt man hochgefüllte PUR-Schaumstoffe, Integralschaumstoffe, EVA/PE/PP/EPDM-Schwerfolien und TPE/TPO-Spritzgießteile ein; die dann wiederum mit den Absorbermaterialien kombiniert werden. Die Designabdeckungen sind meistens PA-Spritzgiessteile und die akustisch wirksamen Hitzeschilde sind in der Regel Sandwichbauteile, die aus mikroperforierter Aluminiumfolie, Steinwolle, Schaumstoff und Einstofffaser- bzw. Mischfaservlies bestehen.

In DE 198 21 532 A ist eine Wärme- und schalldämmende Verkleidung für den Motorraum von Kraftfahrzeugen, insbes. für Stirnwand oder Tunnel, beschrieben, die aus beidseitigem Deckvlies mit dazwischenliegenden akustisch isolierenden Schaumstoff- bzw. Vliesschichten besteht. Die Verbindung der Schichten erfolgt dabei durch Klebeschichten. Es wird beschrieben, dass für den Wärmeschutz partiell oder ganzflächig Metallfolie motorseitig angeordnet ist.

In DE 199 59 089 A ist beschrieben, dass sich zwischen den Lagen zusätzlich ein Konvektionskanal für ein Gasfluidum befindet; und die Anwendung insbesondere für die Motorhaubenisolation oder Stirnwandauskleidung gesehen wird.

In WO 98/46456 A ist beschrieben, dass in einer Schallisolierung Motorhaube die Hohlräume als λ/4-Resonatoren ausgebildet sind; und dies auch zur Bildung eines Hitzeschildes angewandt wird.

Eine weitere Resonatorariwendung in der Motorhaube, in Form eines einseitig geschlossenen Rohres, ist in DE 197 55 750 A beschrieben. Eine schallabsorbierende Abdeckung mit Absorber, bestehend aus der Kunststoffschale und zwischen Schaumstoff-Decklagen befindlichen Schaumstoffmaterialien, wird in DE 199 04 986 A beschrieben; und Schalen-Abkopplungen zur Abkopplung von derartigen Designabdeckungen an schwingenden Teilen, wie u.a. dem Verbrennungsmotor, in DE 198 24 905 A. In WO 2004/090307 wird eine Aggregateabdeckung im Motorraum eines Kraftfahrzeuges beschrieben, die aus einem Trägerteil und einem damit einstückig verbundenen Formteil aus schallabsorbierendem Material besteht.

In DE 197 22 037 A ist ein Hitzeschild mit Schallisolierung beschrieben, bei dem zwischen Wärmeabschirmblech und einer Trägerschicht mit der Wärme- und Schallquelle zugewandten Schallabsorptionsschicht ein definierter Luftspalt vorhanden ist.

Eine Akustikabdeckung, die den Motorraum an dessen Oberseite teilweise oder vollständig abdeckt und in diese Funktions- oder Steuerbauteile des Verbrennungsmotors integriert sind, ist in DE 198 25 739 A beschrieben.

Eine zur Dämmung der Motorgeräusche bestimmte, im Inneren des Motorraumes in Motornähe installierte Schallisolierungsplatte ist in DE 198 47 441 A beschrieben; an deren Ober- als auch an deren Unterseite schallschluckendes Material angeordnet ist.

In DE 100 34 301 A wird ein schallgedämpftes Gehäuse, bestehend aus einer Leichtmetallschaum- und Kunststoff-Sandwichstruktur beschrieben; der Kunststoff ist hierbei vorzugsweise ein Elastomerwerkstoff. Ein vibrationsdämpfendes und schallabsorbierendes Teil, bestehend aus einem Schaumkörper und einem steifen Teil, wird in DE 197 39 778 A beschrieben. Hierbei befindet sich der Schaumkörper auf dem vibrierenden Bereich des Fahrzeugteils und das steife Teil außerhalb. In der Gebrauchsmusterschrift DE 20 2004 020 028 U wird ein Schallabsorber für Kraftfahrzeugmotoren beschrieben, der aus einem selbsttragenden Bauteil und einem schallabsorbierenden Element besteht; und dieser mit dem schallabsorbierenden Element zum Motor zwischen Motor und Kühler positioniert ist.
Bei dem genannten Stand der Technik handelt es sich nicht um eine akustisch und thermisch wirkende Isolation eines Verbrennungsmotors. Diese Schallisolierungen haben keine (geschlossene) Kapselwirkung; diese sind als Einzelteile (zueinander schalloffen) montiert. Zum anderen werden hinreichend bekannte Materialkombinationen in ihrer Lage zueinander beschrieben.

In DE 198 18 859 A ist eine Geräuschkapsel für die Abgasanlage beschrieben, die gegenüber einer von unten angreifenden Kraft elastisch nachgiebig ausgebildet und gelagert ist. Auch diese Kapsel hat keine absorptive und thermische Wirkung.

Ein Schaumstoff mit integrierten thermoplastischen Substanzen wird in EP 1 184 149 A zur schalldichten Abdeckung beschrieben. Als Schaumstoff wird Urethan und als thermoplastische Substanzen werden Styropor und Styropor-Acrylat Copolymer genannt.

Auch in DE 199 35 335 A wird zur Umkapselung (temperaturstabiler) Polyurethanschaum verwendet. Der Schaumstoff wird direkt an den Motor angeschäumt, als selbsttragender Formkörper oder als selbsttragender Verbundkörper appliziert. Siehe hierzu auch Presse-Information BASF P433 6./.10.03 "Thermische Motorkapselung mit PUR-Schaum - ein Weg zu weniger Kraftstoffverbrauch und mehr Verkehrssicherheit" der polymers in the automotive industry, Vol. 1, No. 11+12 / 03, p. 14.

In EP 1 029 742 A wird ebenfalls Polyurethanschaumstoff zur Isolation beschrieben; insbesondere finden hierbei oberflächenaktive Mittel Anwendung. Der Schaumstoff ist partiell, nicht als Kapsel, im Motorraum lokalisiert.
Diese Ausführungen können aber unter dem Gesichtspunkt Wärmemanagement aufgrund der Temperaturverhältnisse in heutigen Motorräumen motornah keine Anwendung mehr finden; auch ist die bewusste Kopplung von akustischer und thermischer Isolation nicht gegeben.

Die in DE 199 10 516 A beschriebene Schallschutzkapsel besteht aus einem Gehäuse und einer innenseitig daran angebrachten Absorptionsschicht. In ihrer Materialstruktur besteht das Gehäuse aus mehreren Schichten mit hohem Elastizitätsmodul; die Schichten selbst sind durch Dämpfungsschichten miteinander verbunden. Als Materialien werden für das Gehäuse Aluminiumbleche und für die Dämpfungsschichten doppelseitig wirkende Klebefolien genannt. Die Absorberschicht besteht aus offenporigem Schaumstoff, Vlies oder Basaltsteinwolle.

Die Schallabsorptionsvorrichtung für eine Motorraumabdeckung It. DE 100 25 826 A besteht aus mehreren Schallabsorptionsplatten, die jeweils mit einem Mittelteil mit schallreflektierenden Eigenschaften und an beiden Seitenflächen des Mittelteiles angebrachten Schallabsorptionselementen versehen sind. Diese Platten sind nebeneinander in der Nähe der Luftöffnungen der Abdeckung angebracht sind.

In EP 0 921 291 A ist eine Antriebskapsel eines Fahrzeuges beschrieben, in der durch spezielle Verbindungskanäle einzelne Kapselelemente mit akustischer Isolation selektiv verbunden sind. Durch diese Kanäle und weitere Führungshilfsmittel erfolgt die Zuführung und Zirkulation von Abkühlluft.

In DE 199 14 934 A wird ein geräuschgedämmtes Maschinengehäuse beschrieben, bei dem die Geräuschkapselung voneinander getrennte und in sich geschlossene Kammern umfasst, welche durch in die Außenwand integrierte, wannenartige und durch Deckel verschlossene Bereiche gebildet sind. Die Deckel sind mit den Rändern der wannenartigen Bereiche durch eine Klebung mit dauerelastischem Kleber schwingungsentkoppelt verbunden, und diese allseitig dicht verschließen. Zumindest einige der Deckel sind als mehrteilige Körper mit schalldämmender Zwischenschicht ausgebildet. Eine Anordnung zur Dämpfung des von einem Motor/Pumpen-Aggregat ausgehenden Schalls mit einer schalldämmenden Abdeckung für das Motor/Pumpen-Aggregat ist in DE 199 60 224 A beschrieben. Die Abdeckung ist als Schalldämmhaube ausgebildet, die über das Motor/Pumpen-Aggregat gestülpt ist und dieses nicht berührt.

In DE 100 06 618 A ist eine Geräuschkapsel beschrieben, die teilweise aus mit kühlmitteldurchströmten Hohlräumen gebildet ist. Diese Kapsel besteht aus Kunststoff und umschließt zu einem Teil die Brennkraftmaschine. Ein schallisolierendes Gehäuse mit spezieller Kühlwasser- und Luftzirkulation ist in EP 0 935 058 A beschrieben. Eine Dämm-Kapsel mit geräuschabsorbierenden Elementen wird in DE 195 43 495 A beschrieben. Das Absorptionsmaterial ist hierbei mit unterschiedlicher Dicke längs des Schallweges angeordnet. Eine schallisolierend gekapselte Brennkraftmaschine wird in DE 10 2004 017 362 A beschrieben. Die Motorhaube ist hierbei mit einem Schallabsorptionselement versehen; zwischen der Motorhaube und dem Schallabsorptionselement ist ein Fussgängerschutz-Deformationselement angeordnet.

Dieser Stand der Technik betrifft keine Kapsel mit thermischer Wirkung oder die bewusste Kopplung von akustischer und thermischer Isolation.

Das trifft auch auf den in DE 10 2004 028 593 A beschriebenen Motorraum eines Kraftfahrzeuges zu, bei dem wärmeabschirmende Bauteile in ihrer Lage zueinander sowie den zu schützenden Teilen gegenüber beschrieben werden.

DE 103 24 257 B3 betrifft einen gattungsgemäßen Schallabsorber, bestehend aus zwei miteinander verbundenen thermoplastisch und/oder duroplastisch gebundenen Textilfaservliesen (1,2), wobei
das der Schallemissionsquelle zugewandte Textilfaservlies (1) eine Schichtdicke im Bereich von 2 bis 15 mm, eine Dichte im Bereich von 50 bis 500 kg/m³, ein Flächengewicht im Bereich von 0,1 bis 5 kg/m² sowie einen Strömungswiderstand im Bereich von 50 bis 1000 kNs/m⁴, das der Schallemissionsquelle abgewandte Textilfaservlies (2) eine Schichtdicke im Bereich von 10 bis 100 mm, eine Dichte im Bereich von 20 bis 100 kg/m³, ein Flächengewicht im Bereich von 0,5 bis 1 kg/m² sowie einen Strömungswiderstand im Bereich von 10 bis 40 kNs/m⁴ mit einer Gesamtdicke des Schallabsorbers im Bereich von 12 bis 30 mm und einem Gesamtflächengewicht des Schallabsorbers im Bereich von 0,5 bis 3 kg/m² aufweist.

Grundsätzlich müssen sämtliche Bauteile in der Automobilindustrie an ihrem Beitrag zu den ständig steigenden Anforderungen an die Wirtschaftlichkeit im Kraftstoffverbrauch und Umweltverträglichkeit gemessen werden. In Bezug auf isolierende oder dämmende Formteile liegt das Augenmerk diesbezüglich bis heute in erster Linie darauf, eine Gewichtsreduktion und/oder Wiederverwertbarkeit der Formteile oder der Materialien zu erreichen.

Es ist bekannt, dass Verbrennungsmotoren in der Kaltlaufphase einem erhöhten Verbrauch und Verschleiß unterliegen. Es ist daher im Stand der Technik durchaus üblich, dass die Kühlung des Motorkühlkreislaufs oder die Entnahme von Motorwärme zu Heizzwecken in der Fahrgastzelle erst nach Erreichen einer bestimmten Temperatur des Motors einsetzt. Eine thermisch isolierende Motoreinkapselung wurde dagegen bislang wegen der hiermit notwendig auftretenden Probleme nicht in Erwägung gezogen.

Neben dem erwarteten hohen Gewicht besteht bei Motoreinkapselungen nämlich grundsätzlich das Problem, dass sie große Auswirkungen auf die akustischen Reaktionen innerhalb des Motorraums und somit auf den Schallpegel in der Fahrgastzelle und außerhalb des Fahrzeugs haben ("pass-by noise").

Die vorliegende Erfindung stellt sich daher die Aufgabe, eine möglichst leichte akustisch und thermisch wirkende Isolation insbesondere für den Kraftfahrzeugbau bereitzustellen, die eine ausbalancierte Reduktion des Motorschalls in der Fahrgastzelle als auch des "pass-by noise" mit höherer Wirtschaftlichkeit im Kraftstoffverbrauch und Umweltverträglichkeit verbindet.

Die Lösung der vorgenannten Aufgabe der Erfindung umfasst prinzipiell eine Lösung nämlich
eine karosseriegetragene Kapsel

In der Erfindung wird die gestellte Aufgabe gelöst durch eine mehrschichtige akustisch und thermisch wirkende Isolation eines Verbrennungsmotors eines Kraftfahrzeuges umfassend wenigstens zwei miteinander vollflächig verbundenen Schichten (2,3) mit unterschiedlichen Strömungswiderständen mit
einer am Karosserieblech anliegenden Schicht (2), die einen Strömungswiderstand (Luft) im Bereich von 50 bis 150 kNs/m⁴, eine Schichtdicke von 5 bis 50 mm und ein Flächengewicht von 0,04 bis 2,5 kg/m² aufweist und
einer sich an Schicht (2) anschließenden, dem Motorraum zugewandten Schicht (3), die einen Strömungswiderstand (Luft) im Bereich von 200 bis 600 kNs/m⁴, eine Schichtdicke von 0,5 bis 8 mm und ein Flächengewicht von 0,2 bis 5 kg/m² aufweist,
wobei die Differenz der Strömungswiderstände (Luft) der Schichten (3) minus (2) wenigstens 50 bis 550 kNs/m⁴, die Differenz der Schichtdicken der Schichten (2) minus (3) wenigstens 4,5 bis 49,5 mm und die Differenz der Flächengewichte der Schichten (3) minus (2) wenigstens 0,16 bis 4,96 kg/m² beträgt. Die am Karosserieblech und gegebenenfalls an der Motorhaube anliegende Motorkapsel weist somit im Gegensatz zu der hautnah am Motorblock anliegenden keinen Luftspalt auf.

Die hautnah anliegende Positionierung der Isolation am Motorblock im Sinne der Erfindung schließt dabei in jedem Fall einen Luftspalt zwischen der Schicht (2) und dem Motorblock von wenigsten 1mm, insbesondere 10 mm, besonders bevorzugt im Bereich von 5 mm bis 8 mm ein. Ein solcher Luftspalt ist im Sinne der Erfindung besonders bevorzugt, da er der mechanischen Entkoppelung vom Körperschall des Motorblocks dient. Eine hautnah anliegende erfindungsgemäße Isolation wird bevorzugt mechanisch gebunden und motorgetragen angebracht und bildet einen thermisch und akustisch abgeschlossenen Raum.

Hautferne Positionierung der Isolation im Sinne der zweiten Ausführungsform der Erfindung bedeutet eine Positionierung im Zwischenbereich zwischen dem den Motorraum umschließenden Karosserieblech beziehungsweise den äußeren Begrenzungen des Motorraums und einer hautnah anliegenden Positionierung im Sinne der Erfindung. Insbesondere wird hierunter eine Positionierung verstanden, die motor- und/oder karosseriegetragen ist und durch einen Abstand von Motorblock zur motorseitigen Begrenzungsschicht der Isolation mindestens 5, bevorzugt mindestens 10, ganz besonders bevorzugt mindestens 20 cm sowie durch einen Abstand von Karosserieblech beziehungsweise dem den Motorraum umschließenden Karosserieblech zur motorabgewandten Begrenzungsschicht der Isolation mindestens 5, bevorzugt mindestens 10, ganz besonders bevorzugt mindestens 20 cm bestimmt ist.

Zusätzlich zu den angegebenen Schichten können die erfindungsgemäßen Isolationen weitere Schichten umfassen, das heißt im Falle des ersten Aspekts, dass sich an Schicht (2), im Falle des zweiten oder dritten Aspekts an die Schicht (3) eine oder mehrere Schichten anschließen können. Bevorzugt schließt sich jeweils eine Deckvlies-Schicht an, die gegebenenfalls mit einer teilweise oder vollständig perforierten Metallfolie versehen sein kann.

Allgemein unter dem Gesichtspunkt der Wärmedämmung/- Wärmeisolation haben sich die folgenden Materialaufbauten bewährt:
Deckvlies / Glaswolle / Leichtschaum / Glaswolle / Deckvlies;
Deckvlies / phenolharz-gebundenes Baumwollfasermischvlies / Leichtschaum / Deckvlies;
Deckvlies / phenolharz-gebundenes Baumwollfasermischvlies / Schwerfolie / Deckvlies;
Deckvlies / Leichtschaum / Schwerfolie / Deckvlies.

Insbesondere für die Anwendung im höheren Temperaturbereich:
Mikroperforierte Aluminiumfolie / Leichtschaum / Schwerfolie / Deckvlies;
Mikroperforierte Aluminiumfolie / Glaswolle / Leichtschaum / Glaswolle / Deckvlies;
Mikroperforierte Aluminiumfolie / Leichtschaum / phenolharz-gebundenes Baumwollfasermischvlies / Deckvlies;
Mikroperforierte Aluminiumfolie / Aluminium-Wolle / Deckvlies;
Mikroperforierte Aluminiumfolie / Aluminium-Wolle / Aluminiumfolie;
Mikroperforierte Aluminiumfolie / Aluminium-Wolle / Leichtschaum / Deckvlies.

Um strömungstechnisch im Materialverbund offen zu sein, eine hochabsorptive Kapselung zu haben, werden bevorzugt zum Motor hin und zur Karosserie hin mikroperforierte Folien eingesetzt.

Anwendung finden hierbei bevorzugt mikroperforierte Aluminiumfolien im Dickenbereich von 30 bis 300 µm; bei zusätzlich selbsttragender bzw. bauteilversteifender Funktion im Dickenbereich von 300 bis 700 µm. Die Verbindung zu den weiteren Schichten des jeweiligen Materialaufbaues erfolgt durch eine Klebeschicht und/oder Umbug.

Die zur Karosserie hin eingesetzten Deckvliese sind bevorzugt als Trägervliese, glatt oder noppaliert, ausgeführt; oft auch mit einer Entdröhnung/Dämpfung zur nächsten zum Motor hin liegenden Schicht versehen.

Bei einer noppalierten Ausführung erzielt man bei der karosseriegetragenen Kapsel eine Entkopplung von Karosserieblech und Kapsel; dass unter anderem durch die dadurch mögliche Hinterlüftung einer Korrosion entgegenwirkt.

Als Trägervlies, insbesondere zur Gewährleistung der Bauteilsteifigkeit finden auch genadelte Bi- oder Trilaminate Anwendung; zwei- oder dreilagige Sandwichvliesstoffe. Bevorzugt hierbei PET/PP-Vliesstoff oder PET-Naturfaservliesschicht (PP/Kenaf/Hanf/Flachs)-PP/PET.

Die erfindungsgemäßen akustisch und thermisch wirksamen Isolationen zeigen auch bei weitgehender oder vollständiger Ummantelung des Motorblocks überraschend ausgewogene, gute akustische Absorptions- und Dämmungseigenschaften. Der Schalldruckpegel in der Fahrgastzelle wie auch an der Fahrzeugaußenseite ("pass-by noise") wird deutlich gesenkt. Daneben verbessern die erfindungsgemäßen Motorkapseln das Warmlaufverhalten des Motors entscheidend durch die wesentlich langsamere Abkühlzeit, was zu einem wesentlich höherem Temperaturniveau beim Wiederanlassen des Motors führt. Dadurch erreicht der Motor in kürzester Zeit seine Betriebstemperatur.

Ein weiterer entscheidender Vorteil der erfindungsgemäßen Motorkapseln ist die Tatsache, dass sich die hervorragenden akustischen und thermischen Isolationseigenschaften bei geringem Bauteilgewicht realisieren lassen. So wird in der Kombination bei hervorragenden akustischen Eigenschaften eine optimale Kraftstoffausnutzung erzielt und der Schadstoffaustoß verringert. Verbesserte Kraftstoffausnutzung macht sich unter anderem durch geringeren Verbrauch und geringeren Kohlendioxid- beziehungsweise Kohlenmonoxidausstoß bemerkbar. Die Kraftstoffverbrauchsreduktion kann bei Gebrauch der erfindungsgemäßen Motorkapseln im Bereich von 9 bis 16 % oder mehr, insbesondere bis zu 15 % betragen. Im Fahrzyklus bleibt die Motortemperatur unter Verwendung der erfindungsgemäßen Motorkapseln auf üblicher Betriebstemperatur, die vom Kühlsystem geregelt wird. Das heißt, es tritt auch bei der erfindungsgemäßen Motorkapseln keine Gefahr der Motorüberhitzung auf.

Aus akustischer Sicht gewährleisten die oben beschriebenen Materialaufbauten (strömungsoffen, Impedanzsprung (Schicht ½)) eine genügend hohe Luftschallisolation bei gleichzeitiger optimierter Absorption.

Die Schichtmaterialien werden so ausgewählt, dass der Strömungswiderstand der Schicht (3) im Bereich von 200 bis 600 kNs/m⁴ und der Strömungswiderstand der Schicht (2) im Bereich von 50 bis 150 kNs/m⁴ liegt. Damit wird ein deutlicher Impedanzsprung erreicht.

Es ist von besonderem Vorteil, wenn die Isolationen eine gewisse Strömungsoffenheit aufweisen.

Als besonders vorteilhaft hat sich herausgestellt, die Schichtdicke der Schicht (3) im Bereich von 1,5 bis 4,5 mm und die Schichtdicke der Schicht (2) im Bereich von 10 bis 30 mm zu wählen.

Besonders bevorzugt liegt das Flächengewicht der Schicht (1 und/oder 3) im Bereich von 0,5 bis 3 kg/m² und das Flächengewicht der Schicht (2) im Bereich von 0,1 bis 1,5 kg/m², wobei die Differenz der Flächengewichte der Schicht (3) minus (2) insbesondere wenigstens 0,4 kg/m² bis 2,9 kg/m² beträgt.

Insbesondere aus wirtschaftlichen und akustischen Gründen ist besonders bevorzugt, wenn die Schicht (3) aus thermoplastisch oder duroplastisch gebundenen Fasermaterialien sowie aus offenzelligem Hartschaum besteht, der Gesamtaufbau jedoch möglichst leicht bei gleichzeitig mindest thermischer Isolation und hoher Luftschallabsorption und genügend hoher Luftschalldämmung aufweist.

Ebenso besteht die Schicht (2) ganz besonders bevorzugt aus leichten Materialien wie
- Leichtschaum (gute akustische Absorption und thermische Isolation),
- Baumwollfaser (BWF)-Vliesen (gegebenenfalls mit (Glas-/ Gesteins-) Faserverstärkung)

Um die wärmedämmenden Eigenschaften zu erhöhen, sind die Verpressgrade im Schichtverbund möglichst gering zu halten. Die erforderlichen Bauteilsteifigkeiten erhält man durch vollflächige, bevorzugt partielle Trägerschichten/-vliese. Diese wiederum können durch Perforationen strömungstechnisch offen ausgeführt werden.

In einer weiteren bevorzugten Ausführungsform ist die im Montagezustand freiliegende Oberfläche aller drei Ausführungsformen teilweise oder vollständig mit einer gegebenenfalls perforierten, insbesondere mikroperforierten Metallfolie (4), insbesondere aus Aluminium versehen. Hierdurch wird eine weitere Verbesserung der Wärmereflexion erzielt.

Die Mikroperforation kann mit unterschiedlicher Lochzahl/Lochdichte pro cm² über die Gesamtfläche ausgeführt werden; entsprechend der abgestrahlten Frequenz der Schallquelle. Man spricht dann von einer frequenzoptimierten Mikroperforation. Auch kann die Lochgeometrie, der Lochabstand und der Lochdurchmesser auf die abgestrahlte Frequenz der Schallquelle abgestimmt werden.
Bei genadelten Mikroperforationen zeigt der Stichkanal stets im Materialverbund nach innen (zur absorptiven Schicht). Durch den damit gegebenen Trichter erhält man die zusätzliche Wirkung eines Helmholtzresonators.

Besonders bevorzugt wird die Schicht (3) als selbsttragende Schicht ausgestaltet.

Die erfindungsgemäße Motorkapsel kann auf verschiedene Weise ausgeführt werden. Beispielsweise kann sie offen oder halboffen sein und den Motorblock lediglich teilweise einkapseln. Volle akustische und thermische Wirksamkeit wird dagegen erzielt, wenn der Verbrennungsmotor und das Getriebe des Kraftfahrzeuges vollständig eingekapselt sind, d.h. die Motorkapsel umlaufend geschlossen ist.

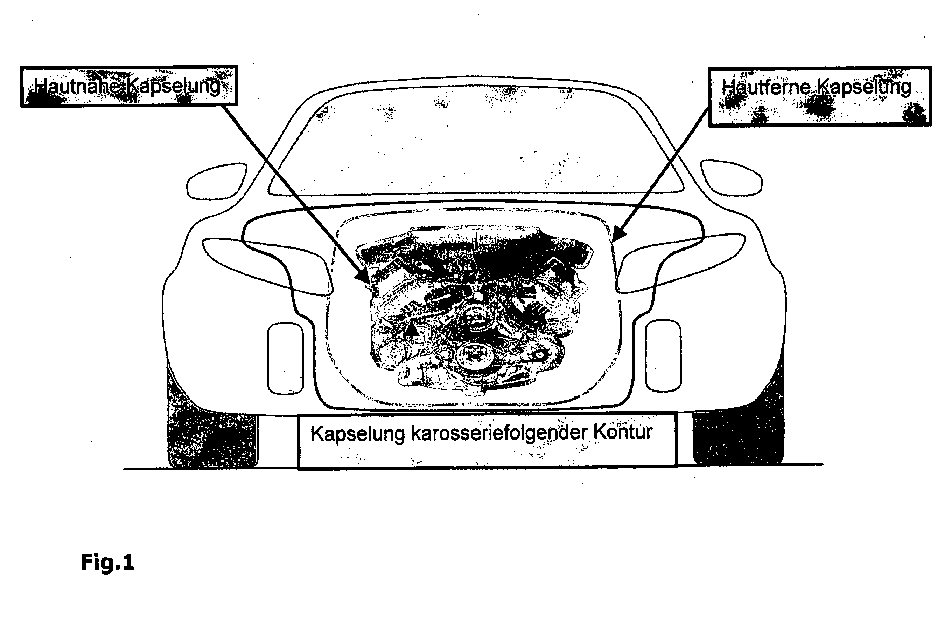

Fig. 1 erläutert das Prinzip der verschiedenen Kapselvarianten.

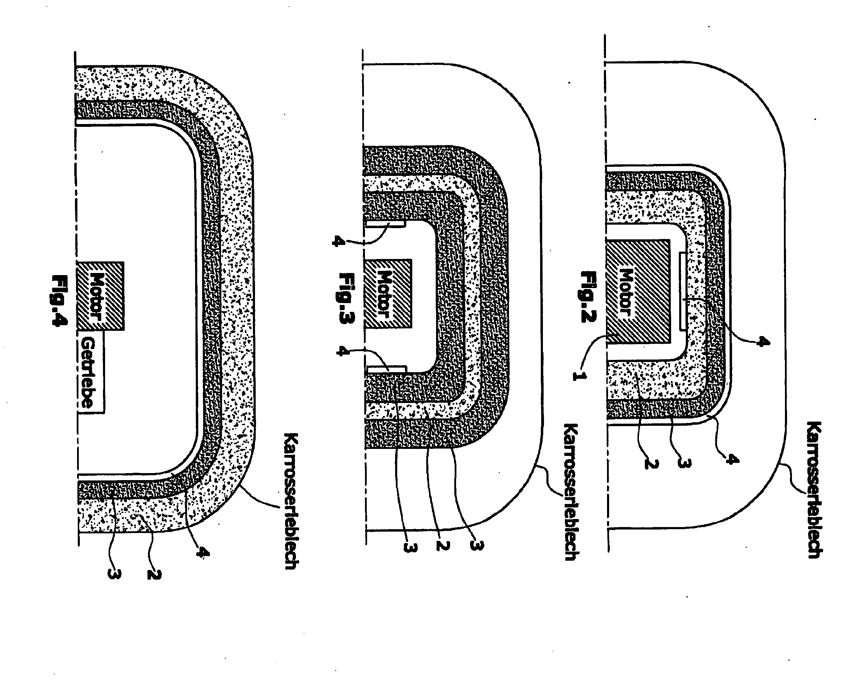

Fig. 2 bis 4 erläutern schematisch den Aufbau der Motorkapsel bei den verschiedenen Reinformen der Kapselvarianten. Dabei ist zu berücksichtigen, dass in einer Verkapselung verschiedene Teile der Varianten miteinander kombiniert vorliegen können. Fig. 2 zeigt die hautnahe Einkapselung, Fig. 3, die hautferne und Fig. 4 die am Karosserieblech anliegende Einkapselung.

Die erfindungsgemäße Einkapselung hat bei laufendem Motor eine Verbesserung des Außengeräusches sowie des Innengeräusches in der Fahrgastzelle bei lastfreiem Betrieb, im Leerlauf sowie unter Last und bei hohen Drehzahlen ergeben.

Die akustisch und thermisch wirkende Isolation kann beispielsweise auch als integraler Bestandteil eines akustisch und thermisch wirkenden Unterbodens eines Kraftfahrzeugs ausgelegt sein und somit zu verbesserten Schalldämmungseigenschaften beitragen, wobei auch die aerodynamischen Wirkungen des Unterbodens verbessert werden können.

In diesen Unterboden können so beispielsweise (textile) Radlaufschalen oder auch Hitzeschilde integriert sein.

## Patentansprüche

1. Kraftfahrzeug mit einem Verbrennungsmotor und einer mehrschichtigen akustisch und thermisch wirkende Isolation, umfassend wenigstens zwei miteinander vollflächig verbundenen Schichten (2,3) mit unterschiedlichen Luftströmungswiderständen, die
eine am Karosserieblech anliegende Schicht (2), die einen Luftströmungswiderstand, eine Schichtdicke von 5 bis 50 mm und ein Flächengewicht von 0,04 bis 2,5 kg/m² aufweist und die
einer sich an Schicht (2) anschließenden, dem Motorraum zugewandten Schicht (3), die einen Luftströmungswiderstand im Bereich von 200 bis 600 kNs/m⁴, eine Schichtdicke von 0,5 bis 8 mm und ein Flächengewicht von 0,2 bis 5 kg/m² aufweist,
wobei die Differenz der Luftströmungswiderstände der Schichten (3) minus (2) wenigstens 50 bis 550 kNs/m⁴, die Differenz der Schichtdicken der Schichten (2) minus (3) wenigstens 4,5 bis 49,5 mm und die Differenz der Flächengewichte der Schichten (3) minus (2) wenigstens 0,16 bis 4,96 kg/m² beträgt,
wobei die im Montagezustand freiliegende Oberfläche der Schicht (3) teilweise oder vollständig mit einer Folie **(4)**, insbesondere aus Aluminium versehen ist, **dadurch gekennzeichnet, dass** die am Karosseriebleck anliegende Schicht (2) einen Luftströmungswiderstand im Bereich von 50 bis 150 kNs/m⁴ aufweist, und dass die Folie **(4)** mikroperforiert ist.

2. **Kraftfahrzeug** nach Anspruch 1, **dadurch gekennzeichnet, dass** die Schichtdicke der Schicht (3) im Bereich von 1,5 bis 4,5 mm und die Schichtdicke der Schicht (2) im Bereich von 10 bis 30 mm liegt.

3. **Kraftfahrzeug** nach Anspruch 1, **dadurch gekennzeichnet, dass** das Flächengewicht der Schicht (3) im Bereich von 0,5 bis 3 kg/m² und das Flächengewicht der Schicht (2) im Bereich von 0,1 bis 1,5 kg/m² liegt, wobei die Differenz der Flächengewichte der Schicht (3) minus (2) wenigstens 0,4 kg/m² bis 2,9 kg/m² beträgt.

4. **Kraftfahrzeug** nach einem der Ansprüche 1 bis 3, **dadurch gekennzeichnet, dass** die Schicht (2) oder (3) selbsttragend ist.

5. **Kraftfahrzeug** nach einem der Ansprüche 1 bis 4, **dadurch gekennzeichnet, dass** die Schicht (3) karosserietragend ist.

6. **Kraftfahrzeug** nach einem der Ansprüche 1 bis 5, **dadurch gekennzeichnet, dass** der Verbrennungsmotor des Kraftfahrzeuges vollständig eingekapselt ist.

## Claims

1. A motor vehicle with an internal combustion engine and a multilayered acoustically and thermally effective insulation, comprising at least two layers (2, 3) having different air flow resistance values and being connected with one another over the full area thereof, comprising:
a layer (2) in contact with the body panel having an air flow resistance, a layer thickness of from 5 to 50 mm and a basis weight of from 0.04 to 2.5 kg/m²; and
a layer (3) subsequent to layer (2) and facing towards the engine compartment, having an air flow resistance within a range of from 200 to 600 kNs/m⁴, a layer thickness of from 0.5 to 8 mm and a basis weight of from 0.2 to 5 kg/m²;
wherein the difference of the air flow resistance values of layers (3) minus (2) is at least 50 to 550 kNs/m⁴, the difference of the layer thickness values of layers (2) minus (3) is at least 4.5 to 49.5 mm, and the difference of the basis weights of layers (3) minus (2) is at least 0.16 to 4.96 kg/m²;
wherein the surface exposed in the mounting state of layer (3) is partially or completely provided with a foil (4), especially of aluminum, **characterized in that** layer (2) in contact with the body panel has an air flow resistance within a range of from 50 to 150 kNs/m⁴, and that said foil (4) is microperforated.

2. The motor vehicle according to claim 1, **characterized in that** the layer thickness of layer (3) is within a range of from 1.5 to 4.5 mm, and the layer thickness of layer (2) is within a range of from 10 to 30 mm.

3. The motor vehicle according to claim 1, **characterized in that** the basis weight of layer (3) is within a range of from 0.5 to 3 kg/m², and the basis weight of layer (2) is within a range of from 0.1 to 1.5 kg/m², wherein the difference of basis weights of layers (3) minus (2) is at least 0.4 kg/m² to 2.9 kg/m².

4. The motor vehicle according to any of claims 1 to 3, **characterized in that** layer (2) or (3) is self-supporting.

5. The motor vehicle according to any of claims 1 to 4, **characterized in that** layer (3) is supported on the car body.

6. The motor vehicle according to any of claims 1 to 5, **characterized in that** the internal combustion engine of said motor vehicle is completely encapsulated.

## Revendications

1. Véhicule à moteur avec un moteur à combustion interne et une isolation multicouche à effets acoustique et thermique, comprenant au moins deux couches (2, 3) avec des résistances à l'écoulement d'air différentes, étant liées l'une à l'autre sur toutes leurs surfaces, comprenant
une couche (2) en contact avec la tôle de carrosserie, ayant une résistance à l'écoulement d'air, une épaisseur de couche de 5 à 50 mm, et un grammage de 0,04 à 2,5 kg/m², et
une couche (3) succédant la couche (2) et faisant face au compartiment moteur, ayant une résistance à l'écoulement d'air comprise entre 200 et 600 kNs/m⁴, une épaisseur de couche de 0,5 à 8 mm, et un grammage de 0,2 à 5 kg/m²,
la différence entre les résistances à l'écoulement d'air des couches (3) moins (2) étant au moins 50 à 550 kNs/m⁴, la différence entre les épaisseurs de couche des couches (2) moins (3) étant au moins 4,5 à 49,5 mm, et la différence entre les grammages des couches (3) moins (2) étant au moins 0,16 à 4,96 kg/m²,
dans laquelle la surface de la couche (3) qui est exposée dans l'état de montage est équipée partiellement ou complètement d'une feuille (4), notamment en aluminium, **caractérisée en ce que** la couche (2) en contact avec la tôle de carrosserie a une résistance à l'écoulement d'air comprise entre 50 et 150 kNs/m⁴, et que la feuille (4) est microperforée.

2. Véhicule à moteur selon la revendication 1, **caractérisée en ce que** l'épaisseur de couche de la couche (3) est comprise entre 1,5 et 4,5 mm, et l'épaisseur de couche de la couche (2) est comprise entre 10 et 30 mm.

3. Véhicule à moteur selon la revendication 1, **caractérisée en ce que** le grammage de la couche (3) est comprise entre 0,5 et 3 kg/m², et le grammage de la couche (2) est comprise entre 0,1 et 1,5 kg/m², la différence entre les grammages des couches (3) moins (2) étant au moins 0,4 kg/m² à 2,9 kg/m².

4. Véhicule à moteur selon l'une quelconque des revendications 1 à 3, **caractérisée en ce que** la couche (2) ou (3) est autoportante.

5. Véhicule à moteur selon l'une quelconque des revendications 1 à 4, **caractérisée en ce que** la couche (3) est portée sur la carrosserie.

6. Véhicule à moteur selon l'une quelconque des revendications 1 à 5, **caractérisée en ce que** le moteur à combustion interne de ladite véhicule à moteur est complètement encapsulé.
